# EUROPEAN PATENT SPECIFICATION

(11) **EP 0 396 210 B1**
(45) Date of publication and mention of the grant of the patent: **24.11.1993**
(21) Application number: 90201735.9
(22) Date of filing: 09.09.1987
(51) Int. Cl.: B25J 15/06, B25J 15/00

(54) **Hand mechanism**
Handmechanismus
Mécanisme à main

(30) Priority: 09.09.1986 JP 137288/86; 16.09.1986 JP 140590/86
(43) Date of publication of application: 07.11.1990
(62) Divisional of application: 87307981.8
(73) Proprietor: KABUSHIKI KAISHA YAKULT HONSHA, Minato-ku Tokyo 105 (JP)
(72) Inventor: No, Shinichiro, Hoya-shi, Tokyo (JP); Kimura, Minao, Tokorozawa-shi, Saitama-ken (JP)
(74) Representative: Leale, Robin George

(56) References cited:
- DD-A- 220 799
- DD-A- 224 801
- DE-A- 2 600 290
- DE-A- 3 312 483
- FR-A- 2 561 564
- US-A- 4 627 785

## Description

The present invention relates to a hand mechanism, for example for attachment to the wrist portion of the arm of an industrial robot, manipulator, crane, or the like, to perform a composite function such as to suctionally engage and grip an article.

Various kinds of apparatus such as robots, manipulators, fork lift trucks, cranes, etc. have been put into practical use as article handling devices. Hands to hold or grip an article are attached to such devices. These hands are mainly classified into fingerless hands and fingered hands. The fingered hand, as disclosed in e.g. DD-A1- 220 799 or DE - A1 - 33 12 483, has the ability to grip an article. For example, it has the ability to pinch, sandwich, grasp or the like. On the other hand, the fingerless hand has the ability to hold an article. Fingerless hands are further classified into the type having an adsorbing ability and the type having a receiving ability or the like. Further, fingerless hands having the said adsorbing ability may be further classified into the vacuum suction type and the magnetic type.

Many fingered hands use a system in which claws are inserted from the sides of an article into a deep portion of the article to thereby grip the same, and the article is then lifted or otherwise moved. A problem arises in that when many articles are arranged in a pile, they do not have gaps between them. On the other hand, in the case of adsorption type fingerless hands, parts such as claws or the like are not provided at the sides of the hand. Therefore, they can operate on articles which are closely piled up.

Accordingly, the adsorption type hand is used in the case of closely piled up articles. Further, in the case of articles which cannot be picked up by magnetism, the vacuum suction type of the adsorption type hand is the vacuum suction type of the adsorption type hand is used.

In general, the vacuum suction type hand, as disclosed in DD-A1- 224 801, is formed with a vacuum chamber communicating with a vacuum source. Thus, the upper surface of an article is picked up by the vacuum chamber. Then, by moving the hand and industrial robot arm, together with the article, the latter may be subjected to predetermined operations such as loading, unloading, or other movements.

After completion of such operations on the article, the article can be easily released by releasing air into the vacuum chamber. In this manner, with the suction type hand, since only the upper surface of an article is held, there are advantages such that the handling operations can be simplified and the structure of the hand itself is simple. Moreover, the suction force may be relatively large so that even a fairly heavy article can be safely handled.

However, the conventional suction hand has a drawback in that although the holding force in the vertical direction is large, the holding force in the horizontal direction is small. As a result, if a force in the horizontal direction acts on an article, the article may be displaced from the suction pad since the suction force in the horizontal direction is relatively weak. Therefore, although the suction force of the suction type hand is large, in order to more safely perform operations on an article, it is necessary also to provide a mechanical means which can reliably grasp the material.

Thus it is one object of the invention to provide a composite hand mechanism, i.e. a hand having a mechanism to perform composite functions to suctionally hold and grip an article, having a mechanism such that even if a force in the horizontal direction acts on an article being held, the position in which the hand holds the article is not changed.

According to the present invention there is provided a hand mechanism for use in picking up an article, comprising a suction device and a pair of gripping mechanisms, means for moving said suction device in a first direction to engage an article, means for moving the grippers of said gripping mechanisms in said first direction relatively to said suction device, to bring them into lateral alignment with a said article, and means for moving said grippers transversely of said first direction to engage a said article.

In a preferred form of the invention the said suction device is located substantially in the central portion of a frame adapted to be coupled with an end wrist portion of an arm of an industrial robot and is arranged to hold the upper surface of an article by a suction force, and the said gripping mechanisms are disposed one on each side of said suction device to grip both side surfaces of the article, the said gripping mechanisms including gripping frames which are pivotally attached to said frame by hinge pins and whose gripping width and gripping force can be changed, and gripper plates which are movable in the said first direction relative to said gripping frames and are arranged to grip the article, the said gripper plates being movable in the said first direction by rack and pinion mechanisms by a distance which is twice as long as the movement of a member of a driving mechanism thereof.

In use of the composite hand mechanism as described above, the frame is attached to an article handling machine or the like, for example the arm of a robot. A vacuum source is connected to the suction mechanism. A power source or hydraulic pressure source is connected to the drive mechanism of the gripping frames or to the drive mechanism of the rack and pinion mechanisms, thereby driving the gripping frames or rack and pinion mechanisms. The article handling hand is moved over the article and applied to the upper surface of the article. The gripper plates are set to a predetermined length by the rack and pinion mechanisms and the article is gripped from both sides thereof. After the gripping operation of the article is completed in this manner, the arm is driven to move and work the article in accordance with a predetermined procedure. After completion of the work, air is admitted into the vacuum chamber and the suction force provided by the vacuum is removed. The gripping frames of the gripping mechanism are then driven to remove the gripper plates from the article, thereby releasing the article. In this manner, the article handling operation on a single article is completed. The next operation is carried out in a similar manner.

Handling operations on a plurality of articles can also be performed as explained above. However, since the gripping mechanisms are provided on both sides of the suction mechanism and both sides of the article are gripped during handling, even if a force in the horizontal direction acts on the article, displacement of the article in the horizontal direction is prevented by the gripper plates, and at the same time dropping of the article is also prevented. Therefore, the article handling operations are safely performed. In addition, since the gripping mechanisms are provided, even if an accident occurs such as the suction force provided by the vacuum being suddenly lost, dropping of the article can be prevented. Therefore, the article handling operations are safely performed. Further, by gripping the article by the gripping mechanisms, the positions of the suction mechanism and the article are aligned. Thus the composite hand mechanism also functions to adjust the position of the article.

With a composite hand mechanism as described above, since suction and gripping can be simultaneously performed, in a case where a pin hole exists in the film with which an article is packaged and the suction force is thereby weakened, the article is gripped by the gripping mechanisms and dropping of the article can thus be prevented. On the other hand, if a gap between articles is so small that the gripping mechanisms cannot be used, the article is first moved by the suction force until it is in a position in which the gripping mechanisms can be used, and then it can be gripped by the gripping mechanisms. Therefore, articles can be properly handled irrespective of the positions of the articles and the manner in which they are presented.

In a composite hand mechanism according to the invention, for use in an industrial robot, it is preferred to drive the gripping frames and the pinions of the rack and pinion mechanisms by means of a hydraulic cylinders. Since the suction mechanism needs a vacuum source, when an ejector type vacuum pump is used it is convenient to use a cylinder which is actuated by pneumatic pressure provided by the vacuum pump.

Some embodiments of the invention will now be described by way of example and with reference to the accompanying drawings, in which:-
Fig. 1 is a front view showing the general arrangement of a first embodiment of a composite hand mechanism according to the invention, for use in an industrial robot;
Figs. 2 to 5 are diagrams showing a further embodiment of a composite hand mechanism of the invention, wherein:-

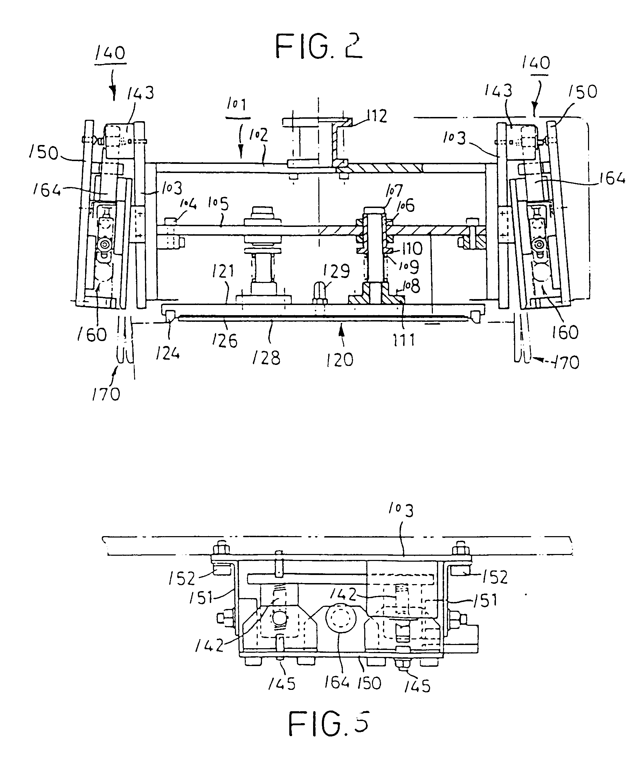

   Fig. 2 is a front view of the hand;

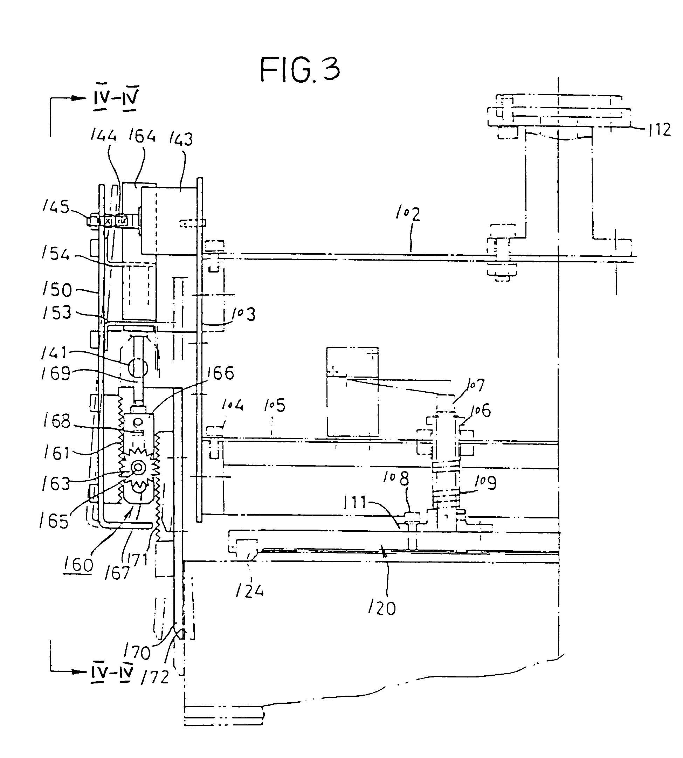

   Fig. 3 is an enlarged front view of the main section in Fig. 2;

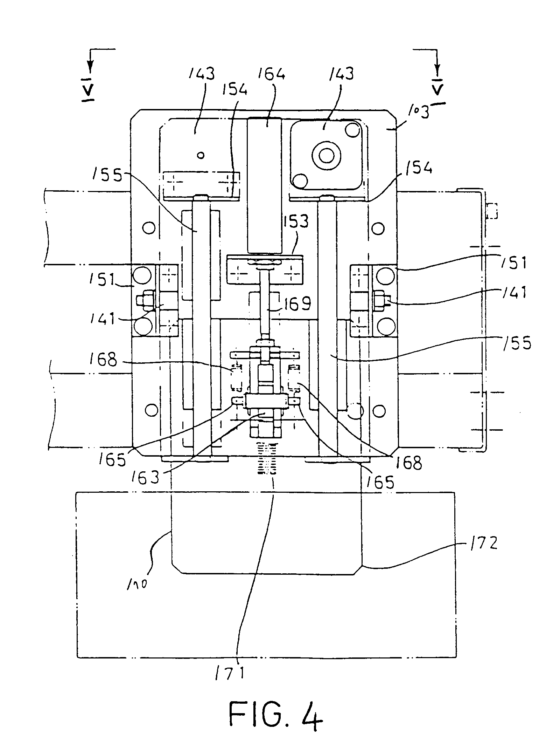

   Fig. 4 is a side elevational view taken along the line IV-IV in Fig. 3; and

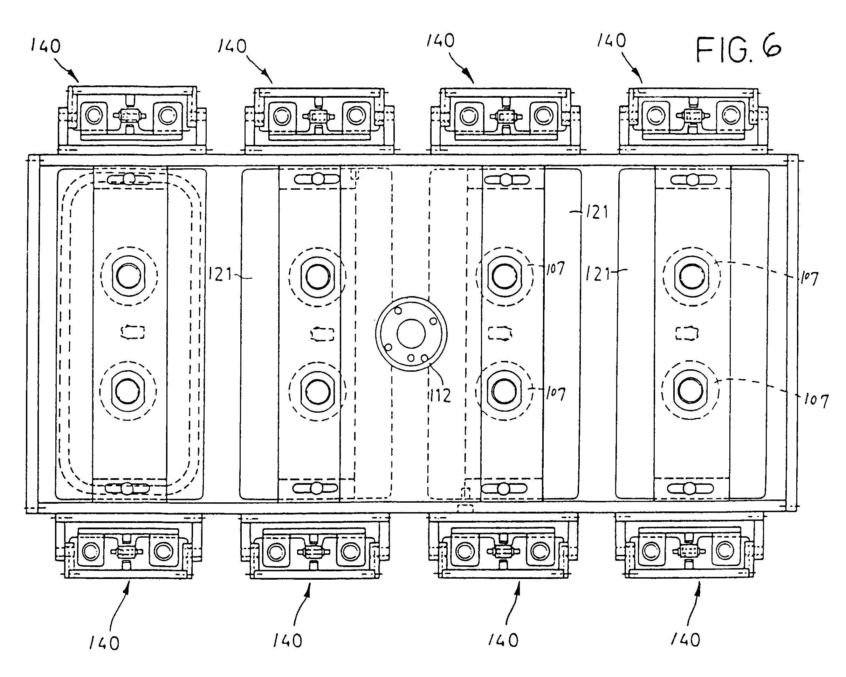

   Fig. 5 is a plan view taken along the line V-V in Fig. 4; and
Fig. 6 is a plan view showing another embodiment of a composite hand mechanism of the invention.

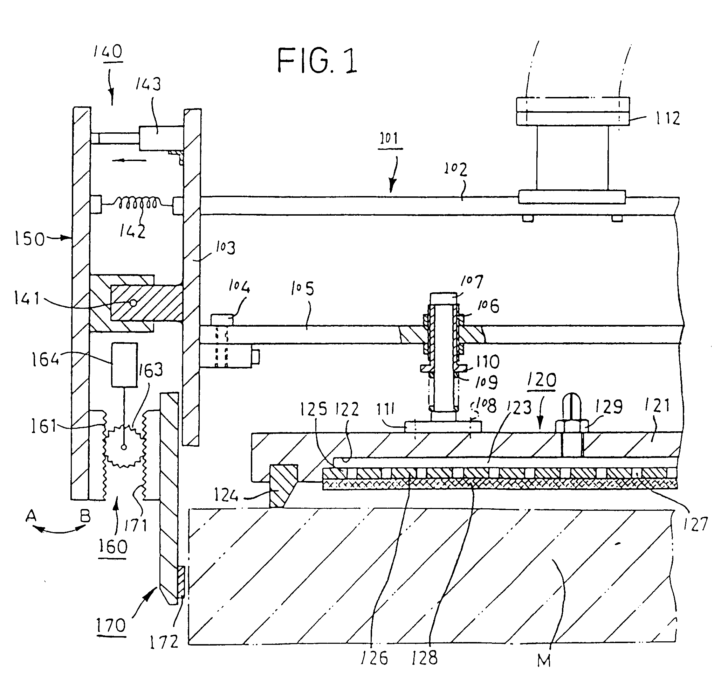

With reference to Fig. 1, an article handling hand of the embodiment comprises a frame 101 which is coupled with the arm of a robot or the like, a suction mechanism 120 which is located in substantially the central portion of the frame 101, and gripping mechanisms 140 disposed one on each side of the suction mechanism 120.

The frame 101 is connected to an article handling machine (not shown), for example the arm of a robot. The frame 101 comprises a first horizontal frame 102, side plates 103 which support both sides of the horizontal frame 102, and a second horizontal frame 105 which extends below the horizontal frame 102 so as to be located parallel to the frame 102 at a predetermined distance therefrom. Both sides of the second horizontal frame 105 are coupled with the side plates 103 by, e.g., bolts 104. Two bushes 106 are attached to the second horizontal frame 105 at a predetermined spacing. Bolts 107 are slidably inserted through the bushes 106 and are screwed into brackets 111 which are secured to the suction plate 121 by bolts 108. Before each bolt 107 is screwed in, a coil spring 109 is attached. The coil spring 109 is disposed between a flange portion 110 of the bush 106 and the bracket 111, thereby elastically coupling the horizontal frame 105 with the suction plate 121 so as not to transfer shocks to the frame 101. A flange 112 is fixed substantially in the centre of the horizontal frame 102. The frame 101 is coupled with an arm (not shown) of an article handling machine by way of the flange 112.

The suction plate 121 forms one of the components of the suction mechanism 124, and is rectangular in plan. A recess 122 is formed in the lower surface of the suction plate 121, i.e. in the surface which faces an article M. The recess 122 partly defines a vacuum chamber 123. A sealing pad 124 is attached to the periphery of the recess 122. The inside face of the edge of the pad 124 is tapered, thereby enabling the pad 124 to engage the upper surface of an article over a wide range, and increasing its hermetic sealing property. A stepped portion 125 is formed in the peripheral edge of the recess 122. A porous plate 126 is received in the stepped portion 125. The vacuum chamber 123 is defined by the recess 122 and the porous plate 126. A plurality of holes 127 are formed in the porous plate 126. In the embodiment shown, a punched metal plate is used as the porous plate 126. A sponge material 128 having continuous air bubbles is attached to the outer surface of the porous plate 126. A connector 129 which is connected to a vacuum source is screw mounted substantially in the centre of the suction plate 121.

A gripping mechanism 140 comprises a gripping frame 150, a rack and pinion mechanism 160, and a gripper plate 170. Two gripping mechanisms 140 are disposed one on each side of the suction mechanism 120. The gripping frame 150 is pivotally attached to the side plate 103 by a hinge pin 141. The rack and pinion mechanism 160 and gripper plate 170 are attached to the gripping frame 150. Therefore, when the gripping frame 150 swings, the rack and pinion mechanism 160 and gripper plate 170 also swing, so that the article M can be gripped from both sides thereof.

For example, a coil spring may be used to swing the frame 150 so as to widen the gripping width. For example, a piston cylinder unit is used to move the frame 150 so as to grip the aticle. In the embodiment shown, a coil spring 142 is attached between the gripping frame 150 and the side plate 103 at a position over the frame 150. Similarly, a piston cylinder uit 143 is disposed between the frame 150 and the side plate 103. The frame 150 is pressed by this piston cylinder unit.

The rack and pinion mechanism 160 comprises a rack 161 fixed to the frame 150, a rack 171 similarly fixed to the plate 170, a pinion 163 arranged in engagement with the racks 161 and 171, and a piston cylinder unit 164 to drive the pinion 163. The gripper plate 170 is disposed so as to be movable in the vertical direction in Fig. 4 relative to the gripping frame 150. When the pinion 163 is moved by driving the piston cylinder unit 164, the rack 171 and plate 170 move by a distance which is twice the movement of the piston of the piston cylinder unit 164, i.e. the movement in the vertical direction of the pinion 163. A pad 172 is attached to the plate 170 to enable the plate to come into soft contact with the article M.

The embodiment of Fig. 1 operates in the following manner. By operating the arm (not shown) of the robot, the suction mechanism 120 is moved to a position just over the article M. At this time, the gripping frame 150 is rotated in the direction indicated by arrow A, by the coil spring 142. The gripper plate 170 is open downwardly as in the diagram. When the ratio of the length in the longitudinal direction of the article M and the length in the breadth direction thereof becomes 1:2 or a value near it, a sufficient gap does not exist between articles M, which were piled up, so that the article cannot be gripped from both sides thereof. In such a case, the article M is first suctioned and lifted up to a predetermined height. Thereafter, the right and left gripper plates 170 are moved by the rack and pinion mechanisms 160 to positions in which the article can be held and gripped. After the plates 170 are set to the proper position by means of the piston cylinder unit 164, the piston cylinder unit 143 is driven to extend its piston outwardly, whereby the gripping plate 170 is rotated in the direction indicated by arrow B. In this manner the article M is gripped from both sides therof by the right and left gripper plates 170. When the article is thus gripped from both sides, the position of the centre portion of the article and the central region of the hand become substantially conincident. After such suctioning and gripping of the article the arm is driven to perform the workpiece handling work. When the article is to be released, air is introduced into the vacuum chamber to release the suction force of the vacuum. Thereafter, the piston of the piston cylinder unit 143 is contracted and the gripper plate 170 is rotated in the direction of the arrow A, thereby removing the plate 170 from the article M.

A further embodiment of a composite hand mechanism according to the invention will now be described with reference to Figs. 2 to 5. In these figures the same parts and components as those shown in the embodiment of Fig. 1 are designated by the same reference numerals and their descriptions are omitted. Since the gripping mechanisms 140 on both sides has the same structure, only one of them will be described.

As shown in Figs. 4 and 5, L-shaped brackets 151 are fixed to the side plate 103 at regular intervals by bolts 152. The grippping frame 150 is pivotally attached to the brackets 151 by hinge pins 141 in the horizontal direction.

The piston cylinder unit 164 is attached to the gripping frame 150 by an L-shaped bracket 153. As clearly illustrated in Fig. 7, two shafts 155 are attached by L-shaped metal fittings 154 in the vertical direction. The gripper plate 170 is vertically guided by the shafts 155.

As shown in Fig. 4, the rack and pinion mechanism 160 is located in substantially the central portion of the gripping frame 150. As shown in Fig. 3, one rack 161 is fixed to the inside (the right- hand side in Fig. 3) of the frame 150 and the other rack 171 is disposed to face the rack 161 on the inside (the left-hand side in Fig. 3) of the plate 170. The pinion 163 is disposed between the racks 161 and 171. A rack pin 165 which rotatably axially supports the pinion 163 is disposed in a long hole 167 of a driving mechanism 166. The rack pin 165 is urged upwardly by a spring 168, Therefore, if a sudden load was applied to the gripper plate 170, the rack pin 165 moves in the long hole 167, thereby preventing damage to the plate 170. The driving mechanism 166 is coupled to a piston rod 169 of the piston cylinder unit 164.

Two pistons cylinder units 143 are attached to the upper part of the side plate 103. A head pin 144 is attached to the end of the piston rod of the unit 143. A head receiving member 145 is threadedly attached to the gripping frame 150 at the position where the head pin 144 faces. Therefore, by adjusting the position of the head receiving member 145, the stroke of the piston rod of the unit 143, i.e. the gripping width of the plate 170, can be adjusted. On the other hand, at positions below the piston cylinder unit 143, two coil springs 142 are attached between the side plate 103 and the frame 150.

Since this embodiment operates in the same manner as the embodiment of Fig. 1, further description is omitted.

In the foregoing embodiment, an example in which a single composite hand mechanism is provided has been described. However, a plurality of such hands may be also provided in parallel as shown in Fig. 6. In this embodiment, four frames, four suction mechanisms, and associated gripping mechanisms, are all attached to a single flange 112. The gripping mechanisms are provided for each of the frames. Therefore, four articles can be simultaneously handled. On the other hand, upon palletizing, the positions of the articles can be individually changed to thereby arrange the articles.

As described in detail above, in a composite hand mechanism of the invention, for use in an industrial robot, the gripping mechanisms to grip both sides of an article are disposed on both sides of the suction mechanism for engaging the upper surface of an article. Therefore, a problem in the suction mechanism is solved in that even if a force in the lateral direction acts on the article, it is not displaced from the suction mechanism. In addition, since the gripper plates of the gripping mechanisms are driven by the rack and pinion mechanism, the driving distance of the pinion is short, so that the whole apparatus can be made of a compact size. Further, since the gripper plates are movable in the vertical direction, by moving them upwardly, article handling can be provided by only the suction mechanism if desired.

## Claims

1. A hand mechanism for use in picking up an article, comprising a suction device (120) and a pair of gripping mechanisms (140), means for moving said suction device in a first direction to engage an article, means for moving the grippers (170) of said gripping mechanisms in said first direction relatively to said suction device, to bring them into lateral alignment with a said article, and means for moving said grippers transversely of said first direction to engage a said article.

2. A hand mechanism as claimed in claim 1, wherein the said suction device (120) is located substantially in the central portion of a frame (101) adapted to be coupled with an end wrist portion of an arm of an industrial robot and is arranged to hold the upper surface of an article (M) by a suction force, and the said gripping mechanisms (140) are disposed one on each side of said suction device to grip both side surfaces of the article, the said gripping mechanisms including gripping frames (150) which are pivotally attached to said frame (101) by hinge pins (141) and whose gripping width and gripping force can be changed, and gripper plates (170) which are movable in the said first direction relative to said gripping frames and are arranged to grip the article, the said gripper plates being movable in the said first direction by rack and pinion mechanisms (160) by a distance which is twice as long as the movement of a member (169) of a driving mechanism (164) thereof.

## Patentansprüche

1. Handmechanismus zur Verwendung beim Aufnehmen eines Gegenstands, umfassend: eine Saugvorrichtung (120) und ein Paar Greifmechanismen (140), ein Mittel zum Bewegen der Saugvorrichtung in eine erste Richtung zum Ergreifen eines Gegenstands, ein Mittel zum Bewegen der Greifer (170) der Greifmechanismen in die erste Richtung relativ zu der Saugvorrichtung, um diese mit dem Gegenstand in seitliche Ausrichtung zu bringen, und ein Mittel zum Bewegen der Greifer quer zu der ersten Richtung zum Ergreifen des Gegenstands.

2. Handmechanismus nach Anspruch 1, in dem die Saugvorrichtung (120) im wesentlichen in dem Mittelabschnitt eines Rahmens (101) angeordnet ist, der zum Koppeln mit einem Endgelenkabschnitt eines Industrieroboterarms geeignet und angeordnet ist, um die obere Fläche eines Gegenstands (M) durch eine Saugkraft zu halten, und worin je einer der Greifmechanismen (140) an einer Seite der Saugvorrichtung angeordnet ist, um beide Seitenflächen des Gegenstands zu ergreifen, wobei die Greifmechanismen Greifrahmen (150), die an dem Rahmen (101) durch Schwenkzapfen (141) schwenkbar angebracht sind und deren Greifweite und Greifkraft geändert werden kann, und Greifplatten (170) umfassen, die in der ersten Richtung relativ zu den Greifrahmen beweglich und zum Ergreifen des Gegenstands angeordnet sind, wobei die Greifplatten in die erste Richtung durch Zahnstangen- und Ritzelmechanismen (160) um einen Abstand beweglich sind, der doppelt so lang wie die Bewegung eines Teils (169) seines Antriebsmechanismus (164) ist.

## Revendications

1. Mécanisme à main destiné à être utilisé pour attraper un article, comprenant un dispositif d'aspiration (120) et deux mécanismes de saisie (140), des moyens servant à déplacer le dispositif d'aspiration dans une première direction pour qu'il vienne au contact d'un article, des moyens servant à déplacer les organes de saisie (170) des mécanismes de saisie dans la première direction vis-à-vis du dispositif d'aspiration, pour les amener dans un alignement transversal avec ledit article, et des moyens servant à déplacer les organes de saisie transversalement à la première direction de façon qu'ils viennent en prise sur ledit article.

2. Mécanisme à main suivant la revendication 1, dans lequel le dispositif d'aspiration (120) est disposé pratiquement dans la portion centrale d'un châssis (101) adapté pour être accouplé à une partie d'extrémité, formant poignet, d'un bras d'un robot industriel et il est agencé de façon à maintenir la surface supérieure d'un article (M) sous l'effet d'une force d'aspiration, et les mécanismes de saisie (140) sont disposés un de chaque côté du dispositif d'aspiration de façon à saisir les deux surfaces latérales de l'article, ces mécanismes de saisie comprenant des châssis de saisie (150) qui sont fixés de manière pivotante sur le châssis (101) par des broches d'articulation (141) et dont on peut faire varier la largeur de saisie et la force de saisie, et des plaques de saisie (170) qui sont mobiles dans la première direction vis-à-vis des châssis de saisie et sont agencées de façon à saisir l'article, ces plaques de saisie étant agencées de façon à pouvoir être déplacées dans la première direction par des mécanismes à crémaillère et à pignon (160), d'une distance qui est égale à deux fois le déplacement d'un organe (169) d'un mécanisme (164) d'entraînement associé.
